Europäisches Patentamt

(19) European Patent Office

Office européen des brevets

(11) Veröffentlichungsnummer: **0 161 616**
**B1**

(12) **EUROPÄISCHE PATENTSCHRIFT**

(45) Veröffentlichungstag der Patentschrifft:
17.01.90

(21) Anmeldenummer: 85105521.0

(22) Anmeldetag: 06.05.85

(51) Int. Cl. ⁴: **H 02 P 7/62**

(54) Verfahren und Vorrichtung zum Stabilisieren der Ortskurve eines durch Integration gebildeten Vektors.

(30) Priorität: 18.05.84 DE 3418573

(43) Veröffentlichungstag der Anmeldung:
21.11.85 Patentblatt 85/47

(45) Bekanntmachung des Hinweises auf die Patenterteilung:
17.01.90 Patentblatt 90/03

㊄ Bennante Vertragsstaaten:
AT BE CH DE FR GB IT LI LU NL SE

(56) Entgegenhaltungen:
EP-A-0 127 158
DE-C-1 806 769
US-A-4 119 893

(73) Patentinhaber: Siemens Aktiengesellschaft
Wittelsbacherplatz 2
D-8000 München 2 (DE)

(72) Erfinder: Blaschke, Felix, Dr.
Steinforststrasse 19
D-8520 Erlangen (DE)

LIBERGRAF, STOCKHOLM 1990

**Beschreibung**

Die Erfindung betrifft ein Verfahren zum Stabilisieren der Ortskurve eines in einer mindestens einen Integrator enthaltenden Rechenschaltung durch Integration eines Vorgabevektors gebildeten Modellvektors für eine vektorielle physikalische Größe, entsprechend den Merkmalen des Oberbegriffs des Anspruchs 1 (DE-PS1 806 769). Die Erfindung betrifft ferner die Anwendung dieses Verfahrens sowie eine Vorrichtung hierzu.

Das der Erfindung zugrundeliegende Problem ist der Einfluß von Integrationsfehlern technischer Integratoren bei der Ermittlung von Rechengrößen, die bei der Steuerung technischer Vorgänge als mathematische Abbilder physikalischer Größen mit integralen Beziehungen benötigt werden.

Bei einem bevorzugten Anwendungsgebiet der Erfindung wird eine Drehfeldmaschine dadurch hochdynamisch gesteuert oder geregelt, daß ihr Ständerstrom von einem Umrichter in Abhängigkeit von zwei flußrichtungsbezogenen, die flußparallele und die flußsenkrechte Ständerstromkomponente unabhängig beeinflussenden Steuergrößen vorgegeben wird. Um von den flußrichtungsbezogenen Steuergrößen auf die raumfesten, sogenannten "ständerbezogenen" Stellgrößen des Umrichters überzugehen, wird eine Information über die Richtung des Flußvektors benötigt, und sofern eine Regelung des Flusses vorteilhaft ist, muß auch der Betrag des Flußvektors ermittelt werden.

Im deutschen Patent 1806 769 ist hierzu ein sogenanntes "Spannungsmodell" vorgeschlagen, das entsprechend den Beziehungen

$$\underline{e}_s = \underline{u}_s - r^s \cdot \underline{i}_s - \textit{l} \cdot d\underline{i}_s/dt$$

$$\underline{\Psi}_s = \int \underline{e}_s^{dt}$$

aus dem Ständerspannungsvektor $\underline{u}_s$ und dem Ständerstromvektor $\underline{i}_s$, die z. B. als ständerbezogene orthogonale Komponenten (Index s1 und s2) aus entsprechenden Spannungs-und Strommeßwerten berechenbar sind, sowie Parametern für den Ständerwiderstand $r^s$ und die Streuinduktivität $\textit{l}$ den EMK-Vektor $\underline{e}_s$ und mittels Integratoren zur komponentenweisen Integration den entsprechenden Flußvektor $\underline{\Psi}_s$ in orthogonalen ständerbezogenen Koordinaten berechnet. Da jedoch Integratoren eine Nullpunkttrift und andere Integrationsfehler aufweisen, ist der in dieser Rechenschaltung als Modellfluß berechnete Modellvektor $\underline{\Psi}_s$ vom mathematischen Integral des Vorgabevektors $\underline{e}_s$ unterschieden. Der ermittelte Flußvektor $\underline{\Psi}_s$ ist also nur ein unvollkommenes Abbild des tatsächlichen Flusses.

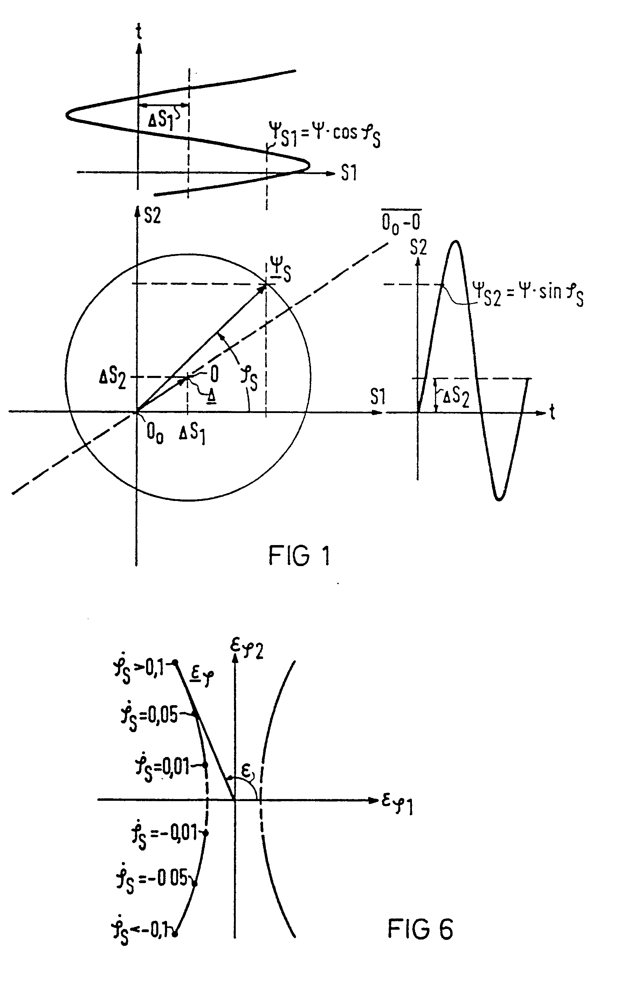

In Figur 1 ist der Modellvektor $\underline{\Psi}_s$ bezüglich kartesischer raumfester Koordinatenachsen S1 und S2 dargestellt. Er besitzt in dieser Koordinatendarstellung die in Fig. 1 gezeigten Komponenten $\Psi_{s1}$ und $\Psi_{s2}$, die gemäß $\Psi_{s1} = \Psi \cdot \cos\varphi_s$ und $\Psi_{s2} = \Psi \cdot \sin\varphi_s$ mathematisch äquivalent sind zu der polaren Betragskoordinate $\Psi$ (Modellvektorbetrag) und der polaren Winkelkoordinate $\varphi_s$ (Richtung des Modellvektors im S1, S2-System).

Für die Bearbeitung der Winkelkoordinate ist häufig eine Darstellung durch ein Winkelfunktionspaar ($\cos \varphi_s$, $\sin \varphi_s$) vorteilhaft, das die kartesischen Komponenten eines durch den Winkel $\varphi_s$ vorgegebenen Einheitsvektors $\underline{\varphi}_s$ beschreibt. Sogenannte "Vektoranalysatoren" liefern aus den Vektorkomponenten den Betrag und das Winkelfunktionspaar. Eine Drehung des Vektors $\underline{\Psi}$ um einen Winkel $\varepsilon$ entspricht einer Drehung des Koordinatensystems und kann durch eine Winkeladdition in einem sogenannten "Vektordreher", dem der Drehwinkel $\varepsilon$ als entsprechender Einheitsvektor $\underline{\varepsilon} = (\cos \varepsilon, \sin \varepsilon)$ zugeführt ist, durchgeführt werden. Die Winkelkoordinate des Vektors im gedrehten Koordinatensystem entspricht einem neuen Einheitsvektor ($\underline{\varphi}_s + \underline{\varepsilon}$), aus dem durch komponentenweise Multiplikation mit dem unveränderten Betrag $\Psi$ die entsprechenden kartesischen Vektorkomponenten im gedrehten System bzw. die Komponenten des gedrehten Vektors im ursprünglichen System folgen.

Figur 1 zeigt nun den Fall, daß im raumfesten Koordinatensystem die vektorielle physikalische Größe $\underline{\Psi}_s$ zwar gleichförmig umläuft und daher mathematisch durch die Komponenten $\Psi \cdot \cos \omega t$ und $\Psi \cdot \sin \omega t$ abgebildet werden müßte (dies entspricht einem zentrischen Kreis um den Koordinatenursprung Oo), jedoch die Trift technischer Integratoren dazu führt, daß die Ortskurve des von den Integratoren gelieferten Modellvektors $\underline{\Psi}_s$ exzentrisch verläuft. Als "Exzentrizität" oder "Gleichanteilsvektor" der Ortskurve wird dabei der von Oo zum Mittelpunkt 0 der Ortskurve führende Vektor $\underline{\Delta}$ bezeichnet. Dieser besitzt die ständerorientierten kartesischen Koordinaten $\Delta_{s1}$ und $\Delta_{s2}$. Die kartesischen Komponenten $\Psi_{s1}$ und $\Psi_{s2}$ des Modellvektors ergeben sich daher zu $\Psi_{s1} = \Delta_{s1} + \Psi \cdot \cos \omega t$, $\Psi_{s2} = \Delta_{s2} \Psi \cdot \sin \omega t$ mit den Gleichanteilen $\Delta_{s1}$ und $\Delta_{s2}$.

Um diese Gleichanteile zu unterdrücken, ist in der erwähnten DE-PS1 806 769 vorgesehen, den Modellvektor $\underline{\Psi}_s$ des Flusses über einen Nullpunktregler zu führen, der daraus einen Korrekturvektor bildet. Die vektorielle Summe (Summenvektor) aus dem negativen Korrekturvektor und dem vorgegebenen Vektor $\underline{e}_s$ der EMK wird dann der Integration zur Bildung des Vektors $\underline{\Psi}_s$ selbst unterworfen.

Die dadurch gebildete Regelschleife regelt somit den Gleichanteil im Integratorausgang auf Null, verursacht aber einen Winkelfehler, der dynamisch und stationär zu einer Fehleinstellung des Modellvektors führt und bei kleineren Frequenzen immer größer wird. Daher darf diese Gleichanteilsregelung nur relativ schwach eingreifen und kann größere Fehler nicht ausregeln. Deshalb ist in der deutschen Offenlegungsschrift 28 33 542 ein sogenanntes "adaptives Spannungsmodell" vorgeschlagen, bei dem die Rückführungsschleife parallel über einen P-Regler und einen I-Regler geführt ist, deren Durchgriff frequenzabhängig gewichtet ist. Man erhält dadurch zwar einen frequenzunabhängigen Fehlwinkel, der bei der Auslegung der Steuerung solange berücksichtigt werden kann, wie er verhältnismäßig klein gehalten werden kann. Für eine ausreichende Stabilität der Ortskurve sind jedoch Fehlwinkel bis zu 40° erforderlich, deren Kompensation in der Steuerung zu Schwierigkeiten führt.

Daher ist in der deutschen Offenlegungsschrift 30 26 202 vorgesehen, in der Rückführungsschleife den Modellvektor nicht auf Null auszuregeln, sondern auf einen Sollwert, der auf andere Weise gewonnen wird. Es sind nämlich auch andere Möglichkeiten zur Berechnung des Flusses aus geeigneten Istwerten möglich. So kann insbesondere eine als "Strommodell" bekannte Rechenschaltung verwendet werden, die aus dem Ständerstrom, der Läuferstellung (oder auch der Läuferfrequenz) sowie bei Synchronmaschinen aus dem Erregerstrom durch Nachbildung der dynamischen Vorgänge der Maschine den in der Maschine vom Strom erzeugten Fluß berechnet.

Dieses Strommodell ist insbesondere dann vorteilhaft, wenn bei niedrigen Drehzahlen die EMK nur kleine Amplituden aufweist und daher die Flußberechnung im Spannungsmodell mit Rechenfehlern behaftet ist. Bei dieser bekannten Anordnung ist jedoch der vom Strommodell berechnete Modellvektor als Sollwert für die Nullpunktregler in der Rückführungsschleife des Spannungsmodells verwendet und der Durchgriff der Nullpunktregler ist derart frequenzabhängig, daß diese Nullpunktregelung praktisch nur bei niedrigen Frequenzen wirksam ist. Daraus ergibt sich, daß bei niedrigen Frequenzen das Spannungsmodell vom Strommodell geführt wird. Das Strommodell bestimmt dann weitgehend den Modellvektor des Spannungsmodells und erst bei höheren Frequenzen überwiegt der Einfluß des Spannungsmodells. Dieses Vorgehen ermöglicht zwar die Ermittlung des Flußvektors in einem großen Frequenzbereich, ohne daß zwischen Strommodell und Spannungsmodell umgeschaltet werden muß, jedoch ist das Ergebnis des Spannungsmodells von der Güte des Strommodells abhängig. Außerdem setzt es die Existenz des Strommodells voraus. Ähnliches gilt auch, wenn das Spannungsmodell von dem für die Regelung des Flusses vorgegebenen Sollwert geführt würde.

In der nicht vorveröffentlichten DE-A-3 319 350, Fig. 3, ist vorgeschlagen, für den vom Spannungsmodell gelieferten Modellvektor und den vom Strommodell als Sollwert gelieferten Vektor jeweils die polaren Komponenten zu errechnen. Deren Abweichungen liefern dann die kartesischen Komponenten eines Korrekturvektors, der dem Vorgabevektor $\underline{e_s}$ aufgeschaltet wird, nachdem dieser in ein auf den errechneten Modellvektor synchronisiertes Koordinatensystem transformiert wurde.

Die Integration des Vorgabevektors $\underline{e_s}$ zum Modellvektor erfolgt in diesem Spannungsmodell auf eine Weise, die in der EP-A-127 158 unter Beanspruchung eines auch für die vorliegende Erfindung beanspruchten Prioritätstages beschrieben ist. Dieses Spannungsmodell ist dabei auch in Verbindung mit den Maßnahmen zum Stabilisieren der Ortskurve des Modellvektors beschrieben, die Gegenstand der vorliegenden Erfindung ist.

Die vorliegende Erfindung ist jedoch unabhängig von dem jeweils verwendeten Spannungsmodell.

Der Erfindung liegt die Aufgabe zugrunde, bei einem derartigen Spannungsmodell (bzw. allgemeiner bei einer Integratoren enthaltenden Rechenschaltung zur Bildung eines Modellvektors) durch Integration eines einer physikalischen Größe entsprechenden und aus Meßwerten gebildeten Vorgabevektors auf möglichst fehlerfreie Weise die Intergratortrift zu unterdrücken und die Ortskurve des Modellvektors zu stabilisieren.

Diese Aufgabe wird erfindungsgemäß gelöst durch ein Verfahren mit den Merkmalen des Anspruchs 1, das insbesondere gemäß Anspruch 11 bei einer Drehfeldmaschine angewendet werden kann. Eine erfindungsgemäße Vorrichtung hierzu ist im Anspruch 12 angegeben. Die Unteransprüche enthalten vorteilhafte Weiterbildungen des Verfahrens und der Vorrichtung.

Anhand von zwei Ausführungsbeispielen und 5 weiteren Figuren wird die Erfindung näher erläutert. Es zeigt:

Figur 2 die Ortskurve des Modellvektors bei positivem Umlaufsinn,

Figur 3 die Ortskurve bei negativem Umlaufsinn,

Figur 4 eine Vorrichtung zur Durchführung des Verfahrens mit einem in Ständerkoordinaten arbeitenden Rechenwerk,

Figur 5 eine Vorrichtung mit einem auch flußorientierte Koordinaten benutzenden Rechenwerk und

Figur 6 eine Ortskurve für die Vorgabe eines Steuervektors für den Korrekturvektor.

Bei den aus dem Stand der Technik bekannten Stabilisierungsmethoden ist der Integration die Vektorsumme des Vorgabevektors und eines Korrekturvektors zugrunde gelegt, wobei der Korrekturvektor aus dem von den Integratoren selbst gebildeten Modellvektor direkt abgeleitet ist, z. B. aus der Regelabweichung gegenüber einem vom Strommodell gelieferten Sollvektor. Betrag und Richtung des Korrekturvektors sind dabei aus Betrag und Richtung des Modellvektors abgeleitet, d.h. aus Größen, die nicht lediglich bei dynamischen Änderungen sondern auch im stationären Zustand vorliegen.

Die Erfindung geht davon aus, daß der Korrekturvektor vorteilhaft so zu bilden ist, daß er nur bei dynamischen Änderungen der vektoriellen physikalischen Größe bzw. des die vektorielle physikalische Größe abbildenden Modellvektors auftritt, aber bei stationären Zuständen, also einem gleichmäßigen Umlauf des Modellvektors auf einer zentrischen Ortskurve zu Null wird. Wird nämlich aus der vektoriellen physikalischen Größe eine andere physikalische Größe so hergeleitet, daß sie im stationären Zustand zu Null wird, so muß auch die entsprechende, aus dem mathematischen Abbild dieser vektoriellen physikalischen Größe (d.h aus dem Modellvektor) hergeleitete "flüchtige" Größe im stationären Zustand verschwinden; wird sie im stationären Zustand der vektoriellen physikalischen Größe nicht zu Null, so ist die Nullpunktabweichung ein Maß für die Unvollkommenheit der Abbildung durch den Modellvektor.

Daher wird der Korrekturvektor-Betrag gemäß der Erfindung proportional einer derartigen "flüchtigen" Größe des Modellvektors vorgegeben. Die Richtung dagegen wird vorteilhaft z. B. so gewählt, daß der Korrekturvektor stets oder zumindest nach Intergration über einen Umlauf des Modellvektors auf der Ortskurve dem Gleichanteilsvektor antiparallel gerichtet ist. Der Korrekturvektor wirkt daher nach Mittelung über eine Periode der Exzentrizität der Ortskurve umso stärker entgegen, je stärker die flüchtige Größe (d.h die durch die Verwendung technischer Integratoren bedingten Abbildungsfehler) ist. Er regelt daher im betrachte Fall die Gleichanteile $\Delta_{s1}$ und $\Delta_{s2}$ in den Modellvektor-Komponenten $\Psi_{s1}$ und $\Psi_{s2}$ aus, ohne stationär einen verfälschenden Einfluß auf Phase und Betrag des Modellvektors ausüben zu können.

Die Richtungsvorgabe kann allgemein mittels vorgegebener Funktionen von geeigneten Eingangsgrößen vorgenommen werden, um - gegebenenfalls unter Berücksichtigung von Zustandsgrößen der vektoriellen physikalischen Größe - den Winkel zwischen dem Korrekturvektor und dem Modellvektor (und vorteilhaft auch die Proportionalität zwischen dem Korrekturvektor-Betrag und der flüchtigen Größe) festzulegen.

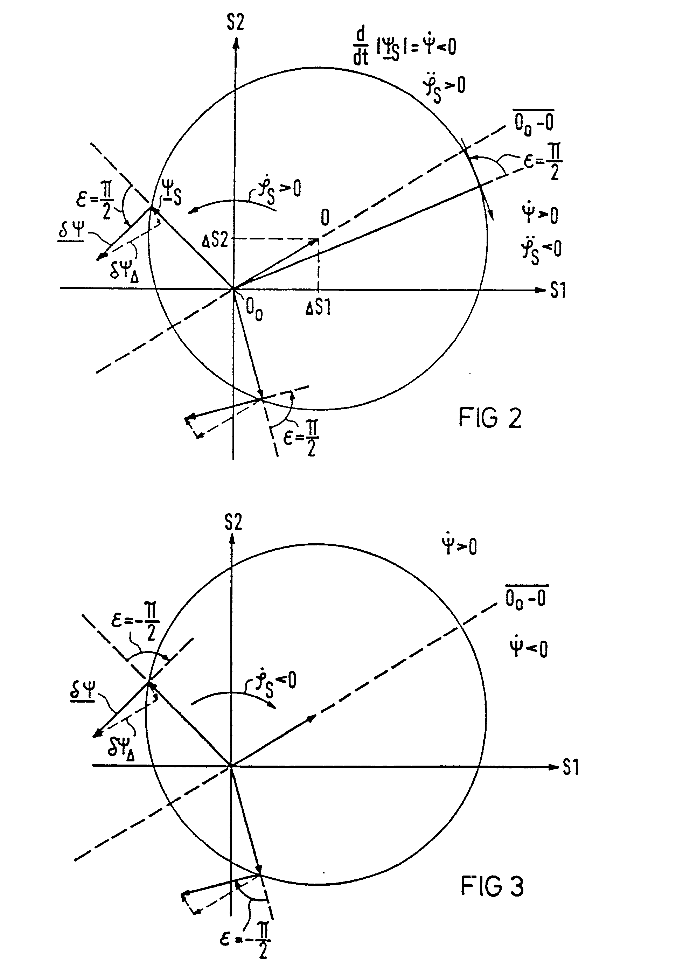

Als eine flüchtige Größe kommt z. B. die Winkelbeschleunigung $\ddot{\varphi}_s$ des Modellvektors $\Psi_s$ in Frage, die bei dem in Fig. 2 gezeigten Fall mit positiven Umlauf ($\dot{\varphi}_\sigma = d\varphi_s/dt > 0$) in der links über der strichlierten Linie $\overline{0o\text{-}0}$ liegenden Halbebene positiv, in der anderen Halbebene jedoch negativ ist. Eine andere, derart "flüchtige" Größe ist insbesondere die negative Ableitung des Modellvektorbetrages ($-\dot{\Psi} = - d\Psi/dt$), die in der linken oberen Halbebene bei positivem Umlaufsinn negativ und in der anderen Halbebene positiv ist.

Im einfachsten Fall ist die Richtung des Korrekturvektors $\delta\Psi$ dadurch vorgegeben, daß der dem Richtungswinkel $\varphi_s$ des Modellvektors entsprechende Einheitsvektor $\underline{\varphi}_s$ um $\varepsilon = \pi/2$ gedreht wird. Fig. 2 zeigt, daß sich in der linken oberen Halbebene, in der $\Psi < 0$ gilt, aus der flüchtigen Größe $-\Psi = |\Psi|$ dann in ständerorientierten Koordinaten der Korrekturvektor $\delta\Psi$ mit

$$\delta\Psi_{s1} = |\Psi| \cos (\varphi_s + \pi/2),$$
$$\delta\Psi_{s2} = |\Psi| \sin (\varphi_s + \pi/2)$$

ergibt, dessen Projektion auf $\Delta$ negativ ist ($\delta\Psi_\Delta < \sigma$). In den anderen Halbebenen ergibt sich wegen $\Psi < 0$ der ständerorientierte Korrekturvektor

$$\delta\Psi_{s1} = -\Psi \cos (\delta_s + \pi/2),$$

$$\delta\Psi_{s2} = -\Psi \sin (\delta_s + \pi/2),$$

dessen Projektion auf $\Delta$ ebenfalls negativ ist, wie Figur 2 für verschiedene Winkellagen des ständerorientieren Modellvektors $\Psi_s$ zeigt. Die zu $\Delta$ parallele Komponente $\delta\varphi_\Delta$ wird dabei Null, wenn zum Modellvektorbetrag und damit auch die zum Modellvektor senkrechte Komponente Null wird ($\delta\Psi = 0$) Dies ist aber nur der Fall, wenn $\Psi_s$ in die Gerade 0-0o fällt und auch die diesen Betrag bestimmende Größe $-\Psi$ ihr Vorzeichen wechselt. Die zu $\Delta$ parallele Komponente $\delta\Psi_\Delta$ ist also bei Vorgabe von $\varepsilon = \pi/2$ stets negativ oder höchstens Null. Die zu $\Delta$ senkrechte Komponente dagegen wechselt in Fig. 2 ihr Vorzeichen, wenn $\Psi_s$ durch die Gerade $\overline{0o\text{-}0}$ geht; sie mittelt sich bei einem Umlauf weg und bleibt daher ohne Einfluß, solange $\Psi_s$ rotiert ($\dot{\varphi}_s \neq 0$). Der Zustand $\dot{\varphi}_s = 0$ (ruhender Fluß) ist hierbei ein singulärer Zustand, der dadurch vermieden werden kann, daß bei ruhendem Fluß (z. B. im Stillstand der Maschine) der Korrekturvektor außer Eingriff gebracht wird.

Fig. 3 zeigt die Bildung des Korrekturvektors bei negativem Umlaufsinn ($\dot{\varphi}_s < 0$) des Modellvektors. Der Korrekturbetrag wird hierbei entweder unter Beibehaltung des Winkels $\varepsilon = \pi/2$ proportional zu $\Psi$ oder unter Übergang zu $\varepsilon = -\pi/2$ weiterhin proportional zu $-\Psi$ vorgegeben. Für den Korrekturvektor ergeben sich dabei die gleichen Verhältnisse wie in Fig. 2, insbesondere ist der Winkel zwischen $\Psi$ und $\delta\Psi$ in der linken oberen Halbebene durch $+\pi/2$ gegeben (entsprechend dem positiven Vorzeichen von $-\dot{\varphi}_s \cdot \Psi$) und in der anderen Halbebene (entsprechend dem negativen Vorzeichen von $-\dot{\varphi}_s \cdot \Psi$) durch $-\pi/2$. Dabei bleibt $\delta\Psi_\Delta$ nach wie vor negativ.

Die Addition des mit $\underline{\varrho}_s$ bezeichneten Vorgabevektors und des Korrekturvektors $\delta\Psi$ zum Summenvektor stellt für den Modellvektor $\Psi_s$, der durch die Integration des Summenvektors gebildet wird, praktisch eine Regelschleife dar, durch die der Gleichanteil in der Ortskurve ausgeregelt wird, wobei jedoch stationär kein Fehler, insbesondere kein Phasenfehler, erzeugt wird und auch keine Führung durch ein Strommodell benötigt wird. Vielmehr wird dadurch automatisch auf den zur stabilen Ortskurve gehörenden Sollwert Null der flüchtigen Größe geregelt.

Diese Regelung entspricht einer Dämpfung bei der Berechnung des Flusses und liefert daher auch bei instationären Bewegungen des Flusses brauchbare Ergebnisse. Um den Einfluß der Dämpfung bei Bewegungen der vektoriellen physikalischen Größe gering zu halten, kann es aber zweckmäßig sein, dieser Regelung einen Sollwert für die flüchtige Größe (z. B. die Änderung des Fluß-Sollwertes, der durch die Steuerung vorgegeben wird, oder die Ableitung des in einem Strommodell berechneten Flusses) vorzugeben. Der Korrekturvektorbetrag wird dann nicht durch die flüchtige Größe $-\Psi$ allein bestimmt, sondern durch die Differenz $-(\Psi-\Psi^*)$ zwischen der flüchtigen Größe und der Führungsgröße $\Psi^*$.

Da außerdem im stationären Zustand der Mo-

7

dellvektor senkrecht zum Vorgabevektor steht, kann in guter Näherung und mit fast gleich gutem Ergebnis als flüchtige Größe auch die zum Modellvektor senkrechte Komponente des Vorgabevektors verwendet werden.

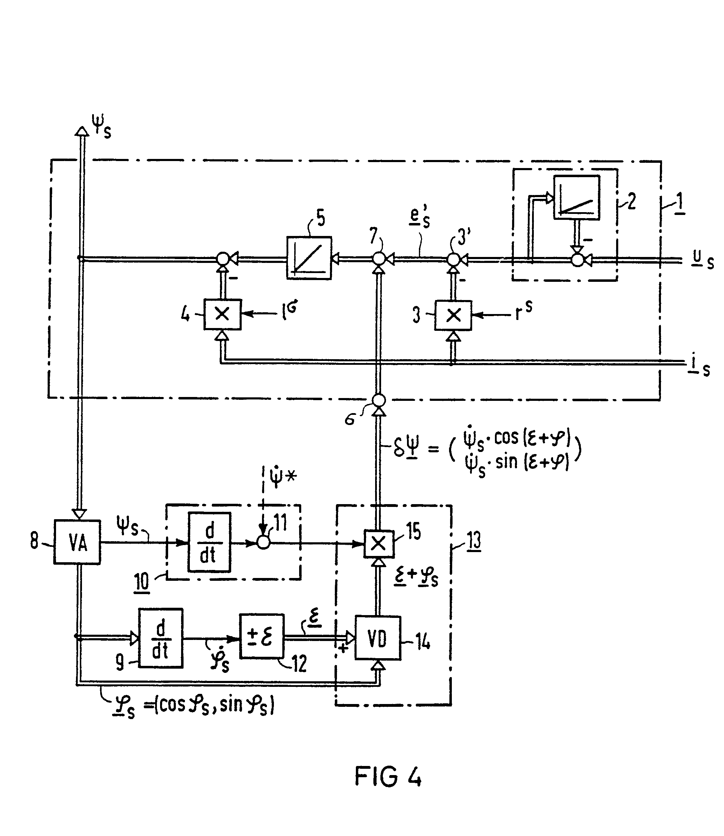

Eine geeignete Vorrichtung zur Durchführung des erfindungsgemäßen Verfahrens ist Figur 4 dargestellt, wobei zur Übertragung von Vektorsignalen dienende Leitungen als Doppelpfeile (entsprechend je einer Einzelleitung für eine der beiden Komponenten eines Vektors) dargestellt sind. Bauglieder wie Multiplikatoren, Addierer und Regler enthalten, soweit sie einen Vektoreingang aufweisen, jeweils ein einzelnes Bauglied für jede der beiden Vektorkomponenten, sind jedoch als einziges Symbol dargestellt.

Bei der Vorrichtung nach Figur 4 enthält die Rechenschaltung 1 Eingänge für den in Ständerkoordinaten dargestellten Ständerspannungsvektor $u_s$ und den Ständerstromvektor $i_s$, wobei für den Ständerspannungsvektor bereits ein schwacher Gleichanteilsregler 2 vorgesehen sein kann. Dabei ist mittels eines Integrators mit großer Zeitkonstante der Gleichanteil von $u_s$ gebildet und von $u_s$ abgezogen. Diese Gleichanteilsseparierung erzeugt den Wechselspannungsanteil von $u_s$ praktisch ohne Winkelfehler, wirkt aber nur sehr langsam.

Die Rechenschaltung 1 enthält nun Mittel zur Bildung des EMK-Vektors $e_s = u_{s8} - r^s \cdot i_s - l^\sigma \cdot di_s/dt$, wobei der Parameter $\tau^s$ des Ständerwiderstandes und der Parameter $l^\sigma$ der Streuinduktivität jeweils an Multiplikatoren 3 und 4 eingestellt sind. Um nun durch komponentenweise Integration des Vorgabevektors mittels der Integratoren 5 zum Modellvektor $\Psi_s$ für den Fluß zu gelangen, ist dabei vorgesehen, dem Wechselspannungsanteil des Spannungsvektors den Vektor $\tau^s i_s$ vor der Integration und den Vektor $l^\sigma \cdot i_s$ hinter den Integratoren negativ aufzuschalten. Der zu integrierende Summenvektor ist im gegebenen Fall also aus den am Eingang 6 anstehenden Korrekturvektor $\delta\Psi$ und einem Vorgabevektor $e'_s = e_s + l^\sigma \cdot di_s/dt$ am Additionsglied 7 gebildet.

Der Rechenschaltung 1 ist ein Vektoranalysator 8 nachgeschaltet, dessen Aufgabe es ist, aus dem Vektorsignal $\Psi_s$ für den von der Rechenstufe gebildeten Modellvektor den Modellbetrag $\Psi$ und das Winkelsignal $\varphi_s$ zu bilden. Insbesondere kann dieses Winkelsignal als ein Winkelfunktionspaar $\cos \varphi_s$, $\sin \varphi_s$ ausgegeben werden, also als entsprechender Einheitsvektor $\varphi_s$.

Ein erstes Differenzierglied 9 bildet aus dem Winkelsignal die Winkelgeschwindigkeit $\dot\varphi_s$. Bei Verwendung des Vektorsignals $\varphi_s$ kann ein derartiges Differenzierglied z. B. entsprechend der deutschen Offenlegungsschrift 31 39 136 ausgebildet sein.

Ein zweites Differenzglied 10 bildet aus dem Modellbetrag dessen Differential $\dot\Psi$. Dieses Differenzierglied kann dabei eine Subtraktionsstelle 11 enthalten, so daß in diesem Fall die Differenz des aus dem Modellflußbetrag ermittelten differenzierten Modellvektorbetrages und einer entsprechenden Führungsgröße $\dot\Psi^*$ gebildet wird.

8

Die vom Differenzierglied 10 gebildete Größe wird zusammen mit dem von einem Drehwinkelbildner 12 gelieferten Drehwinkel $\varepsilon$ einem Vektorbildner 13 zugeführt. Vorteilhaft bildet auch der Drehwinkelbildner als Drehwinkel die Komponenten $\cos\varepsilon$, $\sin\varepsilon$ des entsprechenden Einheitsvektors $\varepsilon$.

Der Vektorbildner 13 liefert nun den Korrekturvektor $\delta\Psi$, der somit den Betrag $|\delta\Psi| = (\Psi^* - \Psi)$ und den Winkel $\delta = \varepsilon + \varphi_s$ aufweist, der z. B. durch Winkeladdition in einem Vektordreher 14 bestimmt wird. Der Betrag kann in einem Betragsbildner 15 durch komponentenweise Multiplikation einer der Einheitsvektoren $\varepsilon$ und $\varphi_s$ berücksichtigt werden. Wegen der Verwendung des Vektordrehers 13 wird der Korrekturvektor in den ständerorientierten Komponenten ausgegeben, die am Additionsglied 7 benötigt werden.

Die Integration des Summenvektors $e'_s + \delta\Psi$ erfolgt bei der Schaltung nach Figur 4 durch Integration der ständerorientierten Komponenten mittels der Integratoren 5. Es kann aber auch der Vorgabvektor in ein rotierendes Koordinatensystem transformiert und der Korrekturvektor bereits im rotierenden Koordinatensystem gebildet werden. Die Integration des Summenvektors wird dann im rotierenden Koordinatensystem vorgenommen.

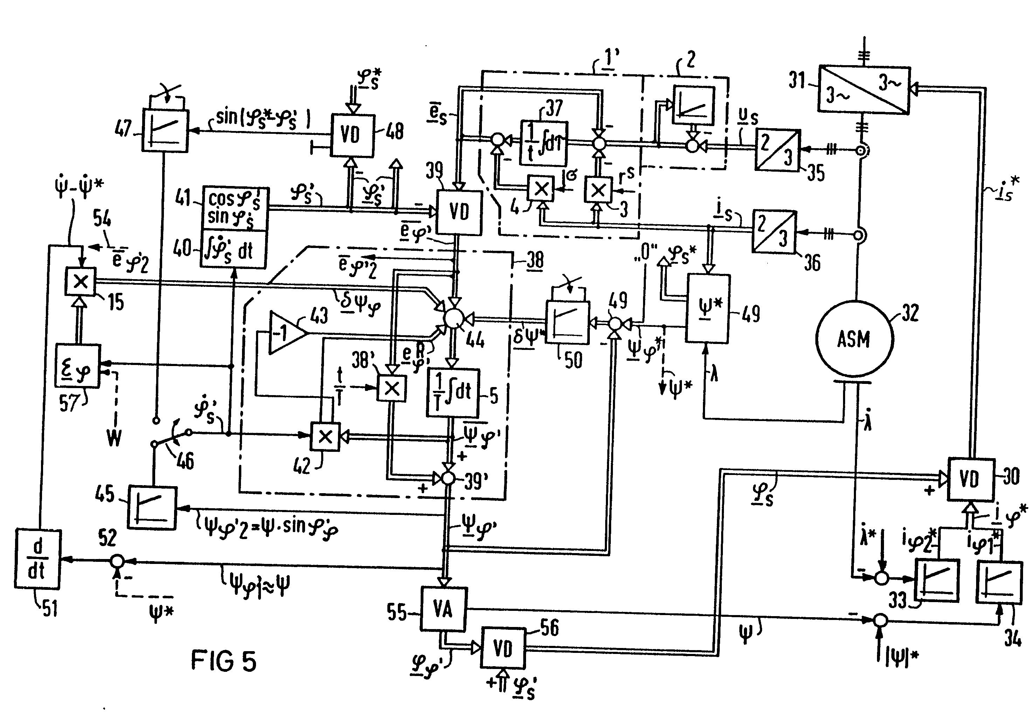

Dies ist in Figur 5 dargestellt, wobei das rotierende Koordinatensystem dadurch bestimmt wird, daß der Winkel einer mit $\varphi'_s$ bezeichneten Koordinatenachse des Koordinatensystems dem Winkel $\varphi_s$ zwischen dem Modellvektor und der ständerorientierten S1-Achse nachgeführt wird. Dieses "feldorientierte" Koordinatensystem ist gegenüber dem ständerorientierten System um den Winkel $\varphi'_s$ gedreht. In einem derartigen (mit dem Index $\varphi'$ gekennzeichneten) Koordinatensystem ist allerdings zu berücksichtigen, daß die integrale physikalische Beziehung zwischen dem Vorgabevektor und dem Modellvektor unter Berücksichtigung einer rotatorischen Komponente lautet:

$$\Psi_{\varphi'} = \int (e_{\varphi'} + e^R_{\varphi'}) \, dt$$
$$\text{mit } e^R_{\varphi 1'} = \dot\varphi_s' \cdot \Psi_{\varphi 2'}, \quad e^R_{\varphi 2'} = -\dot\varphi_s' \cdot \Psi_{\varphi 1'}$$

Dabei gilt im abgeglichenen Zustand ($\varphi'_s \to \varphi_s$ und Rotationsfrequenz $\dot\varphi'_s \to$ Flußfrequenz $\dot\varphi_s$) für die Komponente des Modellvektors in diesem Koordinatensystem:

$$\Psi_{\varphi 2} = |\Psi_{\varphi 1}| \cdot \sin (\varphi_s - \varphi'_s) \to \sigma \,,$$
$$\Psi_{\varphi 1'} = |\Psi_{\varphi 1}| \cdot \cos (\varphi_s - \varphi'_s) \to \Psi = |\Psi_{\varphi 1}|.$$
d.h. $\varphi_{\varphi'} = \varphi - \varphi'_s \to 0, \; \Psi_{\varphi'} \to |\Psi_{\varphi'}| = \Psi, \; \Psi_{\varphi'} \to \Psi \cdot \varphi_s = \Psi_s$.

In Figur 5 ist ferner dargestellt, wie das bisher geschilderte Verfahren und die entsprechende Vorrichtung mit der Steuerung der Drehfeldmaschine zusammenwirkt:

In der Steuerung wird ein feldorientierter Strom-Sollvektor $i^*_\varphi$ gebildet, der von einem Vektordreher 30 durch Drehung um den Winkel $\varphi s$ in das ständerorientierte Koordinatensystem transformiert wird und dadurch einen ständerorientierten Sollvektor $i^*_s$ liefert, der (z. B. durch eine nicht dargestellte Ständerstromregelung und einen Steuersatz) den Umrichter so steuert, daß der Ständer einer Drehfeldmaschine (z. B. Asynchronmaschine 32) mit einem entsprechenden Iststrom $i_s$ gespeist wird. Die feldsenkrechte Komponente $i^*_{\varphi 2}$ bestimmt dabei als Führungsgröße für die feldsenkrechte Komponente des Ständerstroms (Wirkstrom) das Drehmoment der Maschine und kann durch einen überlagerten Regler, z. B. den Drehzahlregler 33, vorgegeben werden: Die feldparallele Komponente $i^*_{\varphi 1}$ dagegen ist Führungsgröße für die feldparallele Stromkomponente (Magnetisierungsstrom) und beeinflußt die Größe des Maschinenflusses, daher kann sie z. B. durch einen Flußregler 34 für den Sollbetrag $|\underline{\Psi}|^*$ des Flusses vorgegeben werden. Dieses Prinzip (Vorgabe entkoppelter Führungsgrößen für Fluß und Drehmoment als feldorientierte Komponenten eines Steuervektors und Umwandlung in ständerorientierte Stellgrößen des Stromes mittels des Flußwinkels $\varphi_s$ kann auch auf verschiedenen anderen Wegen verwirklicht sein.

An den Ständerstromanschlüssen der Maschine 32 sind die Vektoren $\underline{u}_s$ und $\underline{i}_s$ über 3/2-Wandler 35, 36 abgegriffen, wobei für den Spannungsvektor $\underline{u}_s$ wieder eine langsame Gleichanteils-Ausfilterung (2) vorgesehen ist.

Der EMK-Detektor 1' ist in diesem Fall entsprechend den Figuren 12 und 13 der deutschen Offenlegungsschrift 30 34 275 ausgebildet und liefert einen aus den Meßwerten von Strom und Spannung gebildeten Vektor $\underline{e}_s$, der der geglätteten EMK $\underline{e}_s$ der Maschine mit einer Glättungszeitkonstante t zugeordnet ist. Hierzu dient der Integrator 37 (Integrationskonstante t). In der Integrationsschaltung 38 kann der Einfluß dieser Glättung wieder dadurch rückgängig gemacht werden, daß aus dem integrierten Summenvektor und dem mit der Glättungszeitkonstanten multiplizierten Vektor (Multiplizierer 38') der geglätteten EMK der dem ungeglätteten Fluß zugeordnete Modellvektor durch Addition (Additionsglied 39') gebildet wird.

Aus dem Vorgabevektor (in diesem Fall dem Vektor $\underline{e}_s$ der geglätteten EMK im ständerorientierten Koordinatensystem) wird mittels des vom Signal $\underline{\varphi}'_s$ beaufschlagten Vektordrehers 39 der ins feldorientierte Koordinatensystem transformierte Vorgabevektor $\underline{e}_{\varphi'}$ gebildet. Das Signal wird aus einem von $\dot{\varphi}_s'$ (d.h. praktisch der Flußfrequenz) beaufschlagten Integrator 40 gebildet, dem hier ein Funktionsbildner 41 zur Bildung der kartesischen Komponenten $\varphi'_{s1} = \cos \varphi'_s$, $\varphi'_{s2} = \sin \varphi'_s$ nachgeschaltet ist, da der Winkel $\varphi'_s$ als Einheitsvektor $\underline{\varphi}'_s$ verarbeitet werden soll.

Die Berücksichtigung der rotatorischen Komponente $\underline{e}^R_{\varphi'}$ bei der Integration mittels der Integratoren 5 kann dadurch geschehen, daß an den Integratoren 5 die die feldorientierten kartesischen Komponenten des integrierten EMK-Vektors darstellenden Ausgangssignale mit der Feldfrequenz $\dot{\varphi}_s$ oder $\dot{\varphi}'_s$ multipliziert werden (Multiplizierer 42) und anschließend unter Vertauschung ihrer Zuordnung zu den ständerorientierten Komponenten der transformierten EMK sowie unter einer Vorzeichenumkehr (Invertierer 43) der Zusatzvektor $\underline{e}^R_{\varphi'}$ gebildet wird, der einem den Integratoren 5 vorgelagerten Additionsglied 44 aufgeschaltet ist.

Die Feldorientierung des für die Koordinatentransformation im Vektordreher 39 benutzten Koordinatensystems kann dadurch erzwungen werden, daß die Komponente $\Psi_{\varphi 2'}$ des Modellvektors $\underline{\Psi}_{\varphi'}$ einem Nullpunktregler 45 zugeführt wird, der die Frequenz $\dot{\varphi}'_s$ so lange verändert, bis die ("feldsenkrechte") Komponente $\Psi_{\varphi 2'}$ zu Null wird, also der Modellvektor in Richtung der Koordinatenachse $\underline{\varphi}'_s$ fällt.

Durch Umlegen eines Umschalters 46 kann die Umlauffrequenz des Koordinatensystems aber auch von einem Nachführregler 47 gebildet werden, dem die Winkeldifferenz zwischen $\varphi'_s$ und einer entsprechenden Winkelführungsgröße $\varphi^*_s$ aufgeschaltet ist (bei Verwendung der entsprechenden Vektoren $\underline{\varphi}'_s$, $\underline{\varphi}^*_s$ ist diese Winkeldifferenz einer Komponente eines von diesen Vektoren beaufschlagten Vektordrehers 48 äquivalent). Die Führungsgröße $\varphi^*_s$ kann dabei z. B. an einem von $\underline{i}_s$ und dem Läuferwinkel $\lambda$ gespeisten Strommodell 49 oder einer anderen, für die Drehfeldmaschinensteuerung vorgesehenen Einrichtung zur Vorgabe eines Führungsvektors $\underline{\Psi}^*$ für den errechneten Fluß abgegriffen werden. Der Winkelregler 47 erzwingt dann, daß das der Integration zugrundeliegende Koordinatensystem quasi-stationär durch die Richtungsführungsgröße $\underline{\varphi}^*_s$ vorgegeben ist, jedoch das Spannungsmodell dynamische Änderungen des Flusses (vorübergehende Abweichungen von $\underline{\varphi}_s$ und $\underline{\varphi}^*_s$) noch richtig erfaßt. Damit im quasi-stationären Zustand der Modellvektor tatsächlich entsprechend der Führung des Koordinatensystems feldorientiert ist, ist zusätzlich vorgesehen, den Modellflußvektor an einer Vergleichsstelle 49 mit dem Führungsvektor (dieser besitzt in dem geführten Koordinatensystem nur die Komponente $\Psi^*_{\varphi 1'} = \Psi^*$) einem Betragsnachführungsregler 50 aufzuschalten, der aus der vektoriellen Differenz einen Zusatzvektor bildet, der ebenfalls der Additionsstelle 44 aufgeschaltet ist.

Da diese Führung bei der in Figur 5 gezeigten Stellung des Umschalters 46 nicht benötigt wird, können die Nachführregler 47 und 50 durch Schließen ihres Kurzschlußschalters inaktiviert werden.

Da der Führungsvektor $\underline{\Psi}^*$ den stationären Wert des Modellvektors $\underline{\Psi}_s$ bestimmt, kann immer dann, wenn (z. B. für die erfindungsgemäße Dämpfung) nur stationäre Werte des Flußvektors benötigt werden, der Winkel $\varphi_s$ näherungsweise gleich dem durch die Nachführung bestimmten Winkel $\varphi'_s$ und der Betrag $\Psi$ näherungsweise der zu $\underline{\varphi}'_s$ parallelen Komponente $\Psi_{\varphi 1}$ des im $\varphi'_s$-orientierten Koordinatensystem errechneten Vektors $\underline{\Psi}_{\varphi'}$ gesetzt werden ($\Psi_{\varphi 2} \approx 0$). Für die dynamisch richtige Flußermittlung, wie sie z. B. in der Steuerung vom Vektordreher 30 benötigt wird, muß jedoch der exakte Flußwinkel $\varphi_s$ durch eine

Winkeladdition $\varphi_s = \varphi'_s + \varphi_{s'}$ gebildet werden, um den Winkel zwischen der nachgeführten Koordinatenachse $\varphi'_s$ und der auf $\varphi'_s$-orientierten Flußrichtung $\underline{\varphi}_{\varphi'}$ zu berücksichtigen. In Figur 5 bildet ein Vektoranalysator 55 den Modellvektorbetrag $\Psi$ und die Richtung $\underline{\varphi}_{\varphi'}$ und die Winkeladdition erfolgt durch einen Vektordreher 56.

Die erfindungsgemäße Stabilisierung der Ortskurve geschieht auch nach Fig. 5 dadurch, daß der Additionsstelle 44 am Eingang der Integratoren 5 ein - jetzt durch feldorientierte Komponenten vorzugebender - Korrekturvektor $\underline{\delta\Psi}_\varphi$ vorgegeben wird, der am Betragsbildner 15 abgegriffen ist. Der in Fig. 4 dargestellten Drehwinkelbildner 12 ist an sich bei der bisher besprochenen Variante nicht erforderlich, da bei Vorgabe des Winkels $\varepsilon = \pm \pi/2$ der feldorientierte Korrekturvektor $\underline{\delta\Psi}_\varphi$ einfach durch seine beiden Komponenten $\delta\Psi_{\varphi 1} = \Psi\cos\varepsilon = 0$ bzw. $\delta\Psi_{\varphi 2} = \mp \Psi \cdot \sin\varepsilon = \mp \Psi$ gegeben ist und über einen Differenzierer 51 direkt (oder mittels einer Subtraktionsstelle 52 zur Bildung von $\Psi - \Psi^*$) am Ausgang für die feldparallele Flußkomponente abgegriffen werden kann. Außerdem hat es sich gezeigt, daß nahezu das gleiche Ergebnis erhalten wird, wenn anstelle der Ableitung $\dot\Psi$ des Modellbetrages $\Psi$ die Komponente $e_{\varphi 1}$ verwendet wird, wie durch die strichlierte Leitung 54 dargestellt ist.

Für die erfindungsgemäße Dämpfung ist es in der Regel jedoch vorteilhaft, als Drehwinkel $\varepsilon$ nicht einfach den Winkel $\pi/2$ vorzugeben, sondern diesen Winkel in Abhängigkeit von der Frequenz $\dot\varphi_s$ zu verändern. In Fig. 6 ist die feldorientierte Ortskurve eines Steuervektors $\underline{\varepsilon}_\varphi$ dargestellt, aus dem durch komponentenweise Multiplikation mit der flüchtigen Größe, hier einer der Größen $-\Psi$, $\Psi^* - \Psi$, $-e_{\varphi 2}$ oder $\Psi^* - e_{\varphi 2}$ der Korrekturvektor $\underline{\delta\Psi}_\varphi$ gebildet wird. Gegebenenfalls kann $e_{\varphi 2}$ ebensogut durch $\underline{e}_{\varphi 2}$, $e_{\varphi 2'}$ oder $\underline{e}_{\varphi 2'}$ ersetzt werden.

Man entnimmt dieser Ortskurve, daß der Steuervektor $\underline{\varepsilon}_\varphi$ für Frequenzen über 0,1 nahezu die Richtung $\pm\pi/2$ annimmt (d.h. $|\varepsilon_{\varphi 2}| > |\varepsilon_{\varphi 1}|$) und lediglich für $\dot\varphi_s \to 0$ sich 180° nähert. Dabei entspricht $\varepsilon_{\varphi 2} = 0$ dem singulären Zustand $\dot\varphi_s = 0$ der bei der Vorrichtung dadurch ausgeschlossen wird, daß der entsprechende Korrekturvektor $\underline{\delta\Psi}_\varphi$ bei Frequenzen nahe dem Stillstand außer Eingriff gebracht wird. Die in Fig. 6 gezeigte Ortskurve stellt außerdem sicher, daß bei Umkehrung des Umlaufsinns die in den Fig. 2 und 3 dargestellten Richtungsverhältnisse des Korrekturvektors erhalten bleiben. Je nach motorischem oder generatorischem Betrieb kann dabei $\underline{\varepsilon}_\varphi$ in jedem der vier Quadranten liegen.

Der gemäß Fig. 6 vorgegebene Steuervektor $\underline{\varepsilon}_\varphi$ kann bei der Vorrichtung nach Fig. 5 einfach an einem Funktionsspeicher 57 abgegriffen werden, der von dem am Eingang des Integrators 40 anstehenden Signal angesteuert wird. Für die Steuerung einer Drehfeldmaschine kann es dabei vorteilhaft sein, diesen Steuervektor nicht nur zu Bedämpfung der Rechenschaltung selbst, sondern über deren Eingriff in die Maschinensteuerung auch zur Bedämpfung von instationären Maschinenzuständen zu benutzen. Zu diesem Zweck kann es vorteilhaft sein, an der Maschine eine geeignete Betriebszustandsgröße W (z. B. den Winkel zwischen Spannung und Strom) abzugreifen und den Funktionsspeicher mit dieser vorgegebenen Zustandsgröße W anzusteuern, sofern im Funktionsspeicher 57 der Steuervektor $\underline{\varepsilon}_\varphi$ auch als Funktion dieser Zustandsgröße W gespeichert ist. Dabei ist besonders vorteilhaft, daß mit dem Betrag $|\underline{\varepsilon}_\varphi|$ auch der Proportionalitätsfaktor zwischen dem Korrekturvektorbetrag und der flüchtigen Größe funktionell abhängig vom Betriebszustand verändert werden kann.

Schließlich kann die Vorrichtung nach Fig. 5 dadurch vereinfacht werden, daß anstelle einer komponentenweisen Integration von $\underline{\varrho}_\varphi$ (oder $\underline{e}_\varphi$) nur die Komponente $e_{\varphi 1}$ integriert wird. Die über die Elemente 42 und 43 laufende Rückführungsleitung wird ersetzt durch einen Dividierer zur Bildung des Quotienten $e_{\varphi 2}/\Psi$, wobei dieser Quotient anstelle des Ausgangssignals des Reglers 45 verwendet werden kann. Dadurch entfällt insbesondere der Regler 45, so daß dadurch eine Anordnung entsteht, bei der für die Integration und die erfindungsgemäße Stabilisierung nur noch Gleichgrößen verarbeitet zu werden brauchen, was insbesondere für die Anwendung in einem Mikroprozessor vorteilhaft ist.

Die erfindungsgemäß stabilisierte Flußbestimmung kann bei einer Drehfeldmaschine auf verschiedene Weise verwendet werden. So kann z. B. anstelle zum Eingriff in die Steuerung der Fluß lediglich zu Kontroll- und Justierungszwecken benutzt werden. Benötigt die Steuerung z. B. auch den Parameter des betriebsabhängig sich ändernden Läuferwiderstands, so kann der Fluß auch auf eine vom Läuferwiderstandsparameter abhängige Weise errechnet werden. Die Differenz dieses errechneten Flusses und des Modellvektors kann dann dazu verwendet werden, um während des Betriebes durch Änderung dieses Parameters Identität der beiden Flüsse einzustellen und somit automatisch jede Änderung des Flusses zu erfassen.

Es kann auch vorgesehen sein, insbesondere bei niedrigen Frequenzen die in der Steuerung benötigten Flußdaten an einer anderen Vorrichtung, z. B. einem Strommodell, abzugreifen und die erfindungsgemäße Vorrichtung ohne Eingriff auf die Maschinensteuerung in einem "Bereitschaftsbetrieb" parallel laufen zu lassen und nur bei höheren Frequenzen vom Strommodell auf dieses gedämpfte Spannungsmodell umzuschalten. Der in Fig. 5 gezeigte Umschalter und die Verwendung der Führungsgrößen $\Psi^*$ und $\Psi^*$ geben auch die Möglichkeit, das Spannungsmodell zunächst im stationären Zustand durch andere Größen zu führen, wobei jedoch durch das Spannungsmodell dynamische Flußänderungen erfaßt und in der Maschinensteuerung verarbeitet werden können. Ein Übergang in den ungeführten Zustand kann dabei z. B. bei Erreichen einer bestimmten Grenzdrehzahl diskontinuierlich vorgenommen werden, es kann aber auch ein ge-

13

pulster Betrieb vorgesehen sein, bei dem alternierend zwischen dem geführten und dem ungeführten Zustand umgeschaltet wird, wobei z. B. das Tastverhältnis der Umschaltung drehzahlveränderlich vorgegeben werden kann, um zu einem weichen Übergang zwischen dem geführten und dem ungeführten Zustand zu kommen.

## Patentansprüche

1. Verfahren zum Stabilisieren der Ortskurve eines in einer mindestens einen Integrator (5) enthaltenden Rechenschaltung (1) durch Integration eines Summenvektors ($\underline{e}$'s + $\underline{\delta\Psi}$) aus einem Vorgabevektor und einem Korrekturvektor gebildeten, eine vektorielle physikalische Größe abbildenden Modellvektors ($\underline{\Psi}_s$), dadurch gekennzeichnet, daß dem Korrekturvektor ($\underline{\delta\Psi}$) ein vorbestimmter Winkel ($\epsilon$) gegenüber dem Modellvektor ($\underline{\Psi}_s$) und ein Betrag ($|\delta\Psi| = \Psi$) vorgegeben wird, der aus einer sogenannten flüchtigen Größe des Modellvektors (d.h. dem Abbild einer im stationären Zustand der vektoriellen physikalischen Größe zu Null werdenden physikalischen Größe) abgeleitet ist (Fig.4).

2. Verfahren nach Anspruch 1, dadurch gekennzeichnet, daß der Korrekturvektor nach Mittelung über einen Umlauf auf der Ortskurve der Gleichkomponente des Modellvektors parallel ist (Fig. 2, Fig. 3).

3. Verfahren nach Anspruch 1 oder 2, dadurch gekennzeichnet, daß die Richtung ($\epsilon + \varphi_s$) des Korrekturvektors ($\underline{\delta\Psi}$) so vorgegeben wird, daß seine zum Modellvektor senkrechte Komponente höchstens dann Null wird, wenn auch der Betrag des Korrekturvektors Null wird (Fig. 2).

4. Verfahren nach einem der Ansprüche 1 bis 3, dadurch gekennzeichnet, daß die Richtung ($\epsilon + \varphi_s$) des Korrekturvektors ($\underline{\delta\Psi}$) gegenüber dem Modellvektor ($\underline{\Psi}_s$) durch Drehung um einen vorbestimmten positiven oder negativen Drehwinkel ($\epsilon$) bestimmt wird, wobei das Vorzeichen des Drehwinkels mit dem Vorzeichen des Produkts aus der flüchtigen Größe und der Winkelgeschwindigkeit des Modellvektors veränderlich ist (Fig. .2).

5. Verfahren nach einem der Ansprüche 1 bis 4, dadurch gekennzeichnet, daß der Drehwinkel ($\epsilon$) aus einer Funktion der Winkelgeschwindigkeit des Modellvektors - vorzugsweise aus einer Funktion der Winkelgeschwindigkeit ($\dot{\varphi}$'s) des Modellvektors und einer Zustandsgröße (W) - bestimmt wird (Fig. 5).

6. Verfahren nach einem der Ansprüche 1 bis 5, dadurch gekennzeichnet, daß der Korrekturvektorbetrag proportional zur flüchtigen Größe vorgegeben und als flüchtige Größe die Ableitung (- $\dot{\Psi}_\varphi$') des Modellvektorbetrages benutzt wird (Fig. 5).

14

7. Verfahren nach Anspruch 6, dadurch gekennzeichnet, daß der Korrekturvektorbetrag proportional der Differenz ($\Psi_{\varphi'} - \Psi^*$) der flüchtigen Größe und einer Führungsgröße ($\Psi^*$) vorgegeben wird.

8. Verfahren nach Anspruch 6 oder 7, dadurch gekennzeichnet, daß der Proportionalfaktor als Funktion der Winkelgeschwindigkeit des Modellvektors, vorzugsweise als Funktion der Winkelgeschwindigkeit ($\dot{\varphi}$'s) und einer Zustandsgröße (W) vorgegeben wird (Fig. 5).

9. Verfahren nach einem der Ansprüche 1 bis 7, dadurch gekennzeichnet, daß aus das Differential der physikalischen Größe festlegenden Meßwerten ($\underline{u}_s$, $\underline{i}_s$) der Vorgabevektor entsprechend mit einer vorgegebenen Glättungszeitkonstante (t) geglätteten Differential ($\underline{e}_\varphi$') der physikalischen Größe gebildet wird, und daß aus dem Integral ($\underline{\Psi}_\varphi$') des Summenvektors ($\underline{e}_\varphi$' + $\underline{\delta\Psi}_\varphi$) und dem mit der Glättungszeitkonstante (t) multiplizierten geglätteten Differential ($\underline{e}_\varphi$') der Modellvektor ($\underline{\Psi}_\varphi$') für die ungeglättete physikalische Größe gebildet wird (Fig. 5).

10. Verfahren nach einem der Ansprüche 1 bis 9, dadurch gekennzeichnet, daß die Integration des Summenvektors ($\underline{e}_\varphi$' + $\underline{\delta\Psi}_\varphi$) in einem rotierenden Koordinatensystem ($\underline{\varphi}$'s = $\varphi$'s1, $\varphi$'s2) vorgenommen wird und daß die Frequenz ($\dot{\varphi}$'s) des rotierenden Koordinatensystems so bestimmt wird, daß eine der rotierenden Koordinatenachsen der Richtung des Modellvektors ($\underline{\Psi}_\varphi$) und/oder eines durch Führungsgrößen ($\underline{\varphi}^*_s$) vorgegebenen Führungsvektors nachgeführt (Regler 45, 47) wird (Fig. 5).

11. Anwendung des Verfahren nach einem der Ansprüche 1 bis 10 zur Bestimmung des Modellvektors ($\underline{\Psi}_\varphi$') für den Fluß einer Drehfeldmaschine (32) durch Integration (5) des aus Meßwerten von Strom ($\underline{i}_a$) und Spannung ($\underline{u}_s$) gebildeten EMK-Vektors ($\underline{e}_s$), wobei der Drehfeldmaschine der Ständerstrom ($\underline{i}_s$) von einem Umrichter (31) eingeprägt wird in Abhängigkeit von zwei auf den Modellvektor bezogenen Steuergrößen ($i^*_{\varphi1}$, $i^*_{\varphi2}$), die die feldparallele und die feldsenkrechte Komponente des Ständerstroms ($\underline{i}_s$) unabhängig beeinflussen, und wobei insbesondere die Richtungsdifferenz ($\epsilon_\varphi$) zwischen Korrekturvektor und Modellvektor in Abhängigkeit von einer den Lastzustand der Drehfeldmaschine kennzeichnenden Zustandsgröße (W) verändert wird (Fig. 5).

12. Vorrichtung zum Stabilisieren der Ortskurve eines in einer mindestens einen Integrator (5) enthaltenden Rechenschaltung durch Integration eines Vorgabevektors ($\underline{e}$'s) gebildeten, einer vektoriellen physikalischen Größe zugeordneten Modellvektors ($\underline{\Psi}_s$) mit folgenden Merkmalen:

a)    ein Detektor (2, 3, 3') bestimmt aus vorgegebenen physikalischen Einzelgrößen

einen Vorgabevektor ($\underline{e}'s$),

b) die Rechenschaltung enthält einen KorrekturvektorBildner (13) zur Bildung eines aus dem Modellvektor ($\underline{\Psi}s$) abgeleiteten Korrekturvektors ($\delta\underline{\Psi}$), und

c) die Rechenschaltung enthält eine Integrationsschaltung (5) zur Integration des Summenvektors (Additionsglied 7) aus dem Vorgabevektor ($\underline{e}'s$) und dem Korrekturvektor ($\delta\underline{\Psi}$), *dadurch gekennzeichnet,* daß

d) der Korrekturvektor-Bildner betragsbildende Mittel (10, 11, 15) zur Vorgabe eines Korrekturvektor-Betrages, der einer flüchtigen Größe ($\Psi$) des Modellvektors proportional ist, und richtungsbestimmende Mittel (12, 14) zur Vorgabe einer gegenüber dem Modellvektor gedrehten Richtung des Korrekturvektors ($\delta\underline{\Psi}$) enthält. (Fig. 4)

13. Vorrichtung nach Anspruch 12, *dadurch gekennzeichnet,* daß die richtungsbestimmenden Mittel einen Drehwinkelbildner (12) enthalten, der einen Steuervektor ($\underline{\varepsilon}$) mit einer Richtung festlegt, die gegenüber der Richtung ($\varphi_s$) des Modellvektors um einen durch eine Funktion der Frequenz ($\dot{\varphi}_s$) des Modellvektors, vorzugsweise durch eine Funktion dieser Frequenz und einer Zustandsgröße, bestimmten Winkel gedreht ist, und daß die betragsbildenden Mittel die Komponenten des Steuervektors mit einer Funktion der flüchtigen Größe, insbesondere der flüchtigen Größe ($\Psi$) selbst oder der Differenz ($\Psi - \Psi^*$) aus der flüchtigen Größe und einer Führungsgröße ($\Psi^*$), multiplizieren (Fig. 4).

14. Vorrichtung nach Anspruch 12 oder 13, *dadurch gekennzeichnet,* daß die flüchtige Größe ($\Psi - \Psi^*$) an einem Ausgang für den Betrag des Modellvektors über ein Differenzierglied (51) oder an einem Eingang (54) der Integrationsstufe abgegriffen ist (Fig. 5).

15. Vorrichtung nach einem der Ansprüche 12 bis 14, *dadurch gekennzeichnet,* daß der Detektor (1') Mittel (37) zur Bildung eines mit einer Glättungszeitkonstante (t) geglätteten Vektors ($\underline{e}_s$) als Vorgabevektor enthält und daß der Modellvektor ($\underline{\Psi}_s$) am Ausgang der Integrationsstufe als Summe (($\underline{\Psi}_\varphi' + t/T \cdot \underline{e}_\varphi'$), Additionsglied 39') des integrierten Summenvektors und des mit der Glättungszeitkonstanten multiplizierten Vorgabevektors abgegriffen ist (Fig. 5).

16. Vorrichtung nach einem der Ansprüche 12 bis 15, *dadurch gekennzeichnet,* daß der Summenvektor der Integration in einem rotierenden Koordinatensystem (Vektordreher 39) unterworfen wird und daß eine Nachführeinrichtung (40, 41, 45) das rotierende Koordinatensystem so bestimmt, daß eine Koordinatenachse des rotierenden Koordinatensystems in die Richtung des Modellvektors fällt (Fig. 5).

17. Vorrichtung nach Anspruch 16, *dadurch gekennzeichnet,* daß die Richtung ($\varphi'_s$) der Koordinatenachse von einem Integrator (40) vorgegeben wird, dem ein Regler (45 bzw. 47) für die Richtungsabweichung ($\Psi'_{\varphi2} = \Psi \cdot \sin\varphi_\varphi'$ bzw. $\sin(\varphi^*_s - \varphi'_s)$) des Modellvektors von der Koordinatenachse ($\varphi_s$) oder von einer Führungsgröße ($\varphi^*_s$) für die Richtung der Koordinatenachse vorgeschaltet ist (Fig. 5).

## Claims

1. Method of stabilising the locus of a model vector ($\underline{\Psi}_s$) which is formed in a calculating circuit (1), containing at least one integrator (5), by integration of a sum vector ($\underline{e}'_s + \delta\underline{\Psi}$) comprising a prescribed vector and a correction vector, and which maps a vectorial, physical variable, characterised in that there is prescribed for the correction vector ($\delta\underline{\Psi}$) a predetermined angle ($\varepsilon$) relative to the model vector ($\underline{\Psi}_s$) and a magnitude ($|\delta\Psi| = \Psi$) which is derived from a so-called transient variable of the model vector (i.e. mapping of a physical variable which goes to zero, i.e. vanishes, in the steady state of the vectorial, physical variable (Figure 4).

2. Method according to claim 1, characterised in that the correction vector is parallel to the equal component of the model vector after averaging by way of rotation on the locus (Figure 2, Figure 3).

3. Method according to claim 1 or 2, characterised in that the direction ($\varepsilon + \varphi_s$) of the correction vector ($\delta\underline{\Psi}$) is prescribed so that its component which is perpendicular to the model vector vanishes at most when the magnitude of the correction vector vanishes also (Figure 2).

4. Method according to one of claims 1 to 3, characterised in that the direction ($\varepsilon + \varphi_s$) of the correction vector ($\delta\underline{\Psi}$) relative to the model vector ($\underline{\Psi}_s$) is determined by rotation about a predetermined positive or negative angle of rotation ($\varepsilon$), the sign of the angle of rotation changing with the sign of the product of the transient variable and the angular velocity of the model vector (Figure 2).

5. Method according to one of claims 1 to 4, characterised in that the angle of rotation ($\varepsilon$) is determined from a function of the angular velocity of the model vector - preferably from a function of the angular velocity ($\dot{\varphi}'_s$) of the model vector and of a state variable (W) (Figure 5).

6. Method according to one of claims 1 to 5, characterised in that the correction vector magnitude is prescribed proportional to the transient variable, and the derivation ($- \Psi_\varphi'$) of the model vector magnitude is used as transient variable (Figure 5).

7. Method according to claim 6, characterised in that the correction vector magnitude is prescribed proportional to the difference ($\Psi_\varphi'$ - $\Psi^*$) between the transient variable and a command variable ($\Psi^*$).

8. Method according to claim 6, or 7, characterised in that the proportional factor is prescribed as a function of the angular velocity of the model vector, preferably as a function of the angular velocity ($\dot{\varphi}'_s$) and of a state variable (W) (Figure 5).

9. Method according to one of claims 1 to 7, characterised in that there is formed from the measured values ($u_s$, $i_s$) determining the differential of the physical variable, the prescribed vector corresponding to the differential ($e_\varphi'$), smoothed by a prescribed smoothing time constant (t), of the physical variable; and in that there is formed from the integral ($\Psi_\varphi'$) of the sum vector ($e_1'$ + $\delta\Psi_1$) and the smoothed differential ($e_s'$), multiplied by the smoothing time constant (t), the model vector ($\Psi_1'$) for the unsmoothed physical variable (Figure 5).

10. Method according to one of claims 1 to 9, characterised in that integration of the sum vector ($e_1'$ + $\delta\Psi_\varphi$) is effected in a rotating coordinate system ($\varphi'_s$ = $\varphi'_{s1}$, $\varphi'_{s2}$); and in that the frequency ($\dot{\varphi}'_s$) of the rotating coordinate system is determined in such a way that one of the rotating coordinate axes is guided in accordance with the direction of the model vector ($\Psi'_\varphi$) and/or of a command vector prescribed by command variables ($\varphi^*_s$) (regulators 45, 47) (Figure 5).

11. Application of the method according to one of claims 1 to 10 for determining the model vector ($\Psi_\varphi'$) for the flux of an induction machine (32) by integration (5) of the EMF vector ($e_s$) formed from measured values of current ($i_s$) and voltage ($u_s$), the stator current ($i_s$) being impressed upon the induction machine by a converter (31) as a function of two control variables ($i^*_{\varphi1}$, $i^*_{\varphi2}$), related to the model vector, which affect the field-parallel and the fieldperpendicular component of the stator current ($i_s$) independently, and, in particular, the directional difference ($\varepsilon\varphi$) between correction vector and model vector being changed as a function of a state variable (W) characterising the load state of the induction machine (Figure 5).

12. Apparatus for stabilising the locus of a model vector ($\Psi_s$) which is formed in a calculating circuit containing at least one integrator (5), by integration of a prescribed vector ($e'_s$) and which is coordinated with a vectorial, physical variable, having the following features:

a) a detector (2, 3, 3') determines from prescribed physical individual variables a prescribed vector ($e'_s$),

b) the calculating circuit contains a correction vector forming means (13) for forming a correction vector ($\delta\Psi$) derived from the model vector ($\Psi_s$), and

c) the calculating circuit contains an integration circuit (5) for the integration of the sum vector (adder 7) from the prescribed vector ($e'_s$) and the correction vector ($\delta\Psi$), characterised in that

d) the correction vector forming means contains magnitude-forming means (10, 11, 15) for prescribing a correction vector magnitude which is proportional to a transient variable ($\Psi$) of the model vector, and direction-determining means (12, 14) for prescribing a direction of the correction vector ($\delta\Psi$), which is rotated relative to the model vector (Figure 4).

13. Apparatus according to claim 12, characterised in that the direction-determining means contain an angle of rotation forming means (12) which determines a control vector ($\varepsilon$) with a direction which is rotated, relative to the direction ($\varphi_s$) of the model vector, about an angle which is determined by a function of the frequency ($\dot{\varphi}_s$) of the model vector, preferably by a function of this frequency and of a state variable; and in that the magnitude-forming means multiply the components of the control vector by a function of the transient variable, more particularly the transient variable ($\Psi$) itself or the difference ($\Psi$ - $\Psi^*$) between the transient variable and a command variable ($\Psi^*$) (Figure 4).

14. Apparatus according to claim 12 or 13, characterised in that the transient variable ($\Psi$ - $\Psi^*$) is tapped at an output for the magnitude of the model vector via a differential element (51) or at an input (54) of the integration stage (Figure 5).

15. Apparatus according to one of claims 12 to 14, characterised in that the detector (1') contains means (37) for forming as prescribed vector a vector ($e_s$) smoothed by a smoothing time constant (t); and in that the model vector ($\Psi_s$) is tapped at the output of the integration stage as sum (($\Psi_{s'}$ + t/T · $e_\varphi'$) adder 39') of the integrated sum vector and of the prescribed vector multiplied by the smoothing time constant (Figure 5).

16. Apparatus according to one of claims 12 to 15, characterised in that the sum vector is subject to integration in a rotating coordinate system (vector rotator 39); and in that a follow-up device (40, 41, 45) determines the rotating coordinate system in such a way that a coordinate axis of the rotating coordinate system falls in the direction of the model vector (Figure 5).

17. Apparatus according to claim 16, characterised in that the direction ($\varphi'_s$) of the coordinate axis is prescribed by an integrator (40), upstream of which there is connected a regulator (45 and 47 respectively) for the direction deviation ($\Psi_{\varphi2}$ = $\Psi$ · sin $\varphi_\varphi'$ and sin ($\varphi^*_s$ - $\varphi_s'$)) of the model vector from the coordinate axis ($\varphi_s'$) or from a command variable ($\varphi^*_s$) for the direction of the coordinate axis (Figure 5).

## Revendications

1. Procédé pour stabiliser le lieu géométrique d'un vecteur modèle ($\underline{\Psi}_s$), formé, dans un circuit de calcul (1) contenant au moins un intégrateur (5), par intégration d'un vecteur somme ($\underline{e}_s' + \underline{\delta\Psi}$) à partir d'un vecteur de référence et d'un vecteur de correction, et reproduisant une grandeur physique vectorielle, caractérisé par le fait qu'on prédétermine pour le vecteur de correction ($\underline{\delta\Psi}$) un angle prédéterminé ($\varepsilon$) par rapport au vecteur modèle ($\underline{\Psi}_s$) et une valeur ($|\delta\Psi| = \Psi$), qui est obtenu à partir de ce qu'on appelle une grandeur transitoire du vecteur modèle (c'est-à-dire l'image d'une grandeur physique s'annulant pendant l'état stationnaire de la grandeur physique vectorielle) (figure 4).

2. Procédé suivant la revendication 1, caractérisé par le fait qu'après formation de la moyenne sur un parcours du lieu géométrique, le vecteur de correction est parallèle à la composante continue du vecteur modèle (figures 2, figure 3).

3. Procédé suivant la revendication 1 ou 2, caractérisé par le fait que la direction ($\varepsilon + \Psi_s$) du vecteur de correction ($\underline{\delta\Psi}$) est prédéterminé de telle sorte que sa composante perpendiculaire au vecteur modèle s'annule au maximum lorsque la valeur du vecteur de correction s'annule également (figure 2).

4. Procédé suivant l'une des revendications 1 à 3, caractérisé par le fait que la direction ($\varepsilon + \varphi_s$) du vecteur de correction ($\underline{\delta\Psi}$) par rapport au vecteur modèle ($\underline{\Psi}_s$) est déterminé par rotation d'un angle de rotation prédéterminé ($\varepsilon$) positif ou négatif, le signe de l'angle de rotation étant variable avec le signe du produit de la grandeur transitoire par la vitesse angulaire du vecteur modèle (figure 2).

5. Procédé suivant l'une des revendications 1 à 4, caractérisé par le fait que l'angle de rotation ($\varepsilon$) est déterminé à partir d'une fonction de la vitesse angulaire du vecteur modèle -de préférence à partir d'une fonction de la vitesse angulaire ($\dot\varphi_s$) du vecteur modèle et d'une grandeur d'état (W) (figure 5).

6. Procédé suivant l'une des revendications 1 à 5, caractérisé par le fait que la valeur du vecteur de correction est prédéterminée proportionnellement à la grandeur transitoire et que la dérivée ($-\Psi_\varphi'$) de la valeur du vecteur modèle est utilisée en tant que grandeur transitoire (figure 5).

7. Procédé suivant la revendication 6, caractérisé par le fait que la valeur du vecteur de correction est prédéterminée proportionnellement à la différence ($\Psi_\varphi' - \Psi^*$) entre la grandeur transitoire et une grandeur pilote ($\Psi^*$).

8. Procédé suivant la revendication 6 ou 7, caractérisé par le fait que le facteur de proportionnalité est prédéterminé en fonction de la vitesse angulaire du vecteur modèle, de préférence en fonction de la vitesse angulaire ($\dot\varphi_s$) et d'une grandeur d'état (W) (figure 5).

9. Procédé suivant l'une des revendications 1 à 7, caractérisé par le fait que le vecteur de référence est formé à partir de valeurs de mesure ($\underline{u}_s$, $\underline{i}_s$), qui déterminent la différentielle de la grandeur physique, en fonction de la différentielle ($\underline{e}_\varphi'$) de la grandeur physique, lissée avec une constante de temps prédéterminée de lissage (t), et que le vecteur modèle ($\underline{\Psi}_\varphi'$) pour la grandeur physique non lissée est formée à partir de l'intégrale ($\Psi_\varphi'$) du vecteur somme ($\underline{e}_\varphi' + \underline{\delta\Psi}_\varphi$) et de la différentielle ($\underline{e}_\varphi'$) lissée, multipliée par la constante de temps de lissage (t) (figure 5).

10. Procédé suivant l'une des revendications 1 à 9, caractérisé par le fait que l'intégration du vecteur somme ($\underline{e}_\varphi' + \underline{\delta\Psi}_\varphi$) est réalisée dans un système de coordonnées rotatif ($\underline{\varphi}'_s = \varphi'_{s1}, \varphi'_{s2}$) et que la fréquence ($\dot\varphi_s'$) du système de coordonnées rotatif est déterminée de manière que l'un des axes de coordonnées rotatifs asservis à la direction du vecteur modèle ($\underline{\Psi}'_\varphi$) et/ou d'un vecteur pilote prédéterminé par des grandeurs pilotes ($\varphi_s^*$) (régulateurs 45, 47) (figure 5).

11. Application du procédé suivant l'une des revendications 1 à 10 pour déterminer le vecteur modèle ($\underline{\Psi}_\varphi'$) pour le flux d'une machine à champ tournant (32), par intégration (5) du vecteur de la force électromotrice ($\underline{e}_s$) formé à partir de valeurs de mesure du courant ($\underline{i}_s$) et de la tension ($\underline{u}_s$), et selon laquelle le courant statorique ($\underline{i}_s$) est injecté par un convertisseur statique (31) dans la machine à champ tournant, en fonction de deux grandeurs de commande ($i^*_{\varphi1}, i^*_{\varphi2}$), qui sont rapportées au vecteur modèle et influent d'une manière indépendante sur la composante, parallèle au champ et la composante, perpendiculaire au champ, du courant statorique ($\underline{i}_s$), et pour laquelle notamment la différence ($\varepsilon\varphi$) entre les directions du vecteur de correction et du vecteur modèle est modifiée en fonction d'une grandeur d'état (W) caractérisant l'état de charge de la machine à champ tournant (figure 5).

12. Procédé pour stabiliser le lieu géométrique d'un vecteur modèle ($\underline{\Psi}_s$), formé dans un circuit de calcul, contenant au moins un intégrateur (5), par intégration d'un vecteur de référence ($\underline{e}_s$), et associé à une grandeur physique vectorielle, présentant les caractéristiques suivantes:

a)     un détecteur (2, 3, 3') détermine, à partir de grandeurs individuelles physiques prédéterminées, un vecteur de référence ($\underline{e}'_s$),

b)     le circuit de calcul contient un dispositif (13) de formation du vecteur de correction, qui sert à former un vecteur de correction ($\underline{\delta\Psi}$) dérivé du vecteur modèle

(Ψₛ), et

c) le circuit de calcul contient un circuit d'intégration (5) servant à réaliser l'intégration du vecteur somme (circuit additionneur 7) à partir du vecteur de référence (eₛ) et du vecteur de correction (δΨ), caractérisé par le fait que

d) le dispositif de formation du vecteur de correction contient des moyens (10, 15, 16) de formation de la valeur, qui servent à prédéterminer une valeur du vecteur de correction, qui est proportionnelle à une grandeur transitoire (Ψ) du vecteur modèle, et des moyens (12, 14), déterminant la direction, servant à prédéterminer une direction du vecteur de correction (δΨ), décalée angulairement par rapport au vecteur modèle (figure 4).

13. Dispositif suivant la revendication 12, caractérisé par le fait que les moyens de détermination de la direction contiennent un dispositif (12) de formation de l'angle de rotation, qui détermine un vecteur de commande (ε) possédant une direction, qui est pivotée, par rapport à la direction (φₛ) du vecteur modèle, d'un angle déterminé par une fonction de la fréquence (φ̇ₛ) du vecteur modèle, de préférence par une fonction de cette fréquence et d'une grandeur d'état, et que les moyens de formation de la valeur multiplient les composantes du vecteur de commande par une fonction de la grandeur transitoire, notamment la grandeur transitoire (Ψ) elle-même ou de la différence (Ψ - Ψ*) entre la grandeur transitoire et une grandeur pilote (Ψ*) (figure 4).

14. Dispositif suivant la revendication 12 ou 13, caractérisé par le fait que la grandeur transitoire (Ψ - Ψ*) est prélevée sur une sortie fournissant la valeur du vecteur modèle, par l'intermédiaire d'un circuit différentiateur (51), ou sur une sortie (54) de l'étage d'intégration (figure 5).

15. Dispositif suivant l'une des revendications 12 à 14, caractérisé par le fait que le détecteur (1') contient des moyens (37) servant à former un vecteur (eₛ), lissé avec référence, et que le vecteur modèle (Ψₛ) est prélevé sur la sortie de l'étage intégrateur sous la forme de la somme ((Ψφ' + t/T · eφ'), (circuit additionneur 39') du vecteur somme intégré et du vecteur de référence multiplié par la constante de temps de lissage (figure 5).

16. Dispositif selon l'une des revendications 12 à 15, caractérisé en ce que le vecteur somme est soumis à l'intégration dans un système de coordonnées rotatif (dispositif de rotation vectorielle 39) et qu'un dispositif d'asservissement (40, 41, 45) détermine le système de coordonnées rotatif de manière qu'un axe de coordonnées de ce système de coordonnées rotatif coïncide avec la direction du vecteur modèle (figure 5).

17. Dispositif suivant la revendication 16, caractérisé par le fait que la direction (φₛ') de l'axe de coordonnées est prédéterminée par un intégrateur (40), en amont duquel est branché un régulateur (45 ou 47) qui sert à régler l'écart de direction (Ψ'φ² = Ψ.sin φφ', ou sin (φₛ*-φₛ')) du vecteur modèle par rapport à l'axe de coordonnées (φₛ') ou à une grandeur pilote (φ*ₛ pour la direction de l'axe de coordonnées (figure 5).

$\Psi_{S1} = \Psi \cdot \cos \vartheta_S$

$\overline{0_0 - 0}$

$\underline{\Psi}_S$

$\Psi_{S2} = \Psi \cdot \sin \vartheta_S$

$\Delta S_2$

$\underline{0}$

$\underline{\Delta}$

$\vartheta_S$

$0_0$   $\Delta S_1$

$\Delta S_2$

FIG 1

$\dot{\vartheta}_S > 0,1$   $\underline{\varepsilon}_\vartheta$

$\varepsilon_{\vartheta 2}$

$\dot{\vartheta}_S = 0,05$

$\dot{\vartheta}_S = 0,01$

$\varepsilon$

$\varepsilon_{\vartheta 1}$

$\dot{\vartheta}_S = -0,01$

$\dot{\vartheta}_S = -0,05$

$\dot{\vartheta}_S < -0,1$

FIG 6

FIG 2

FIG 3

$$\delta\underline{\Psi} = \begin{pmatrix} \dot{\psi}_s \cdot \cos(\varepsilon + \varphi) \\ \dot{\psi}_s \cdot \sin(\varepsilon + \varphi) \end{pmatrix}$$

$$\underline{\varphi}_s = (\cos\varphi_s, \sin\varphi_s)$$

FIG 4

FIG 5